# FASCICULE DE BREVET EUROPEEN

(11) **EP 0 360 664 B1**
(45) Date de publication et mention de la délivrance du brevet: **01.06.1994**
(21) Numéro de dépôt: 89402507.1
(22) Date de dépôt: 13.09.1989
(51) Int. Cl.: G21C 3/334

(54) **Dispositif de fixation démontable d'un tube-guide dans un embout d'extrémité d'un assemblage combustible d'un réacteur nucléaire**
Zerlegbare Befestigungsvorrichtung eines Führungsrohres in einem Brennstabbündelendstück eines Kernreaktors
Removable fixture device for a guide tube of a fuel assembly end nozzle of a nuclear reactor

(30) Priorité: 19.09.1988 FR 8812212
(43) Date de publication de la demande: 28.03.1990
(73) Titulaire: FRAMATOME, 92400 Courbevoie (FR); COGEMA, F-78141 Velizy Villacoublay (FR)
(72) Inventeur: Petit, Bernard, F-69230 - Saint Genis Laval (FR)
(74) Mandataire: Bouget, Lucien

(56) Documents cités:
- EP-A- 0 098 774
- EP-A- 0 140 588
- FR-A- 2 493 024

## Description

L'invention concerne un assemblage combustible démontable d'un réacteur nucléaire refroidi par de l'eau et en particulier d'un réacteur refroidi par de l'eau sous pression.

Les réacteurs nucléaires refroidis à l'eau et en particulier les réacteurs nucléaires à eau sous pression comportent des assemblages constitués par un faisceau de crayons combustibles de grande longueur disposés parallèlement les uns aux autres et maintenus dans une ossature formée par des tubes-guides, des entretoises et deux embouts d'extrémité. Les tubes-guides sont disposés dans la direction longitudinale de l'assemblage et sont reliés à des entretoises transversales régulièrement espacées suivant la longueur de l'assemblage.

Les tubes-guides sont également reliés à chacune de leurs extrémités à l'un ou à l'autre de deux embouts constituant des pièces de rigidification et de fermeture de l'assemblage.

Les crayons combustibles de l'assemblage constituent un faisceau dans lequel les crayons sont parallèles entre eux et disposés, dans les sections transversales de l'assemblage, suivant un réseau régulier déterminé par les entretoises. Certaines positions du réseau sont occupées par des tubes-guides qui sont généralement reliés de manière rigide aux entretoises.

Les tubes-guides ont une longueur supérieure à la longueur des crayons combustibles et sont placés dans le faisceau, de manière à comporter une partie saillante par rapport au faisceau de crayons combustibles à chacune de leurs extrémités. Les embouts sont fixés sur ces parties saillantes des tubes-guides de manière à assurer la fermeture de l'assemblage à chacune de ses extrémités.

Les crayons combustibles sont constitués par des pastilles frittées en matériau combustible nucléaire empilées à l'intérieur d'une gaine métallique isolant les pastilles du fluide entourant l'assemblage combustible. Dans le cas d'une rupture de gaine d'un crayon d'un assemblage combustible, il est nécessaire de remplacer très rapidement ce crayon pour éviter les fuites de produit radio-actif dans le fluide de refroidissement du réacteur. Pour accèder aux crayons combustibles et effectuer leur remplacement, il est nécessaire de démonter l'un des embouts de l'assemblage, ce qui suppose de supprimer les liaisons entre les extrémités correspondantes des tubes-guides et l'embout.

Les embouts comportent des trous traversants reproduisant le réseau des tubes-guides dans chacun desquels est engagé et fixé un tube-guide.

De façon à pouvoir remplacer des crayons défectueux dans les assemblages combustibles, on a conçu et mis au point de nouveaux assemblages combustibles comportant des tubes-guides dont la liaison avec l'un au moins des embouts d'extrémité est démontable.

Pour effectuer le remplacement des crayons combustibles défectueux, l'assemblage est placé sous eau en position verticale, dans une piscine telle qu'une piscine de stockage ; l'assemblage repose sur le fond de la piscine par l'un de ses embouts ou embout inférieur. L'autre embout ou embout supérieur est accessible sous une certaine hauteur d'eau depuis le dessus de la piscine.

Dans un type d'assemblage combustible démontable connu, les parties des tubes-guides engagées dans l'embout supérieur de l'assemblage comportent une partie expansible radialement qui peut être, par exemple, rapportée à l'extrémité du tube-guide. Cette partie expansible peut être constituée par une douille fendue présentant une partie en saillie radiale vers l'extérieur qui est destinée à venir se loger dans une cavité de forme correspondante usinée à l'intérieur de l'embout, dans le trou de passage du tube-guide. Un manchon de blocage introduit à l'intérieur du tube-guide réalise l'expansion radiale de la douille fendue et l'accrochage du tube-guide dont la partie en saillie radiale vient se loger à l'intérieur de la cavité usinée dans l'embout.

Le tube-guide n'est engagé dans le trou traversant la plaque adaptatrice de l'embout que sur une certaine longueur, la partie restante du trou, au-dessus du tube-guide, débouchant sur la face supérieure de la plaque adaptatrice de l'embout.

On connaît une liaison démontable pour tube-guide d'assemblage combustible du type décrit ci-dessus comportant un manchon de blocage ayant une douille assurant l'expansion du tube-guide prolongée axialement par une virole de fixation qui vient se loger, lorsque le manchon de blocage est mis en place dans le tube-guide, dans la partie du trou située au-dessus du tube-guide et débouchant sur la face supérieure de la plaque adaptatrice. Des cavités radiales sont prévues dans cette partie du trou de la plaque adaptatrice et la virole de fixation est déformée, après mise en place du manchon de blocage dans le tube-guide, de façon que les parties déformées de cette virole de fixation viennent à l'intérieur des cavités pour réaliser le blocage axial et en rotation du manchon de blocage.

On obtient ainsi une fixation efficace du tube-guide par des opérations qui peuvent être effectuées sans difficulté, par le dessus de l'assemblage.

Cependant, le démontage du tube-guide nécessite qu'on effectue, dans un premier temps, l'extraction du manchon de blocage qui est maintenu dans l'embout par la virole de fixation. Cette opération peut être réalisée par un outil qui est introduit dans le manchon et qui comporte des parties mobiles dans des directions radiales venant se placer sous l'extrémité inférieure du manchon. Une traction est exercée sur l'outil pour permettre le déblocage de la virole de fixation et l'extraction du manchon du tube-guide.

Cette opération d'extraction du manchon de blocage avant le démontage de l'embout de l'assemblage nécessite l'utilisation d'un outillage complexe dont la position, dans la direction axiale, à l'intérieur de l'ouverture de l'embout et du manchon doit être réglée avec une grande précision, afin que les parties mobiles viennent en appui sur l'extrémité inférieure du manchon, lorsqu'on exerce une traction sur l'outil. Il est en outre très difficile de contrôler la mise en place correcte de l'outil à l'intérieur du manchon, depuis le niveau supérieur de la piscine.

De plus, l'extraction du manchon est réalisée par poussée sur son extrémité inférieure, si bien que ce manchon est susceptible de subir un certain flambage qui rend l'extraction plus difficile.

Enfin, les zones déformées de la virole de fixation pénétrant dans les cavités de l'embout ne sont extraites qu'avec difficulté des cavités, lorsqu'on exerce une poussée sur l'extrémité inférieure du manchon.

On connaît également par le EP-A-0.098.774 un manchon de blocage comportant une rainure annulaire de préhension usinée à l'intérieur du manchon, dans une partie supérieure élargie diamétralement du manchon de blocage comportant également la virole déformable. Un tel manchon présente certains avantages, dans la mesure où son extraction peut être effectuée en introduisant un outil dans la rainure annulaire et en assurant une traction sur le manchon par une partie de son alésage interne.

Cependant, un tel manchon de blocage ayant une partie supérieure élargie diamétralement et présentant un épaulement radial séparant la partie supérieure de la partie inférieure de blocage du manchon nécessite un usinage spécial de l'embout de l'assemblage combustible, au niveau de l'ouverture de passage du tube-guide. La forme du manchon entraîne des opérations de formage ou d'usinage plus complexes et plus coûteuses.

De plus, le EP-A-0.098.774 est relatif à un dispositif de fixation d'un tube-guide dans lequel le tube-guide doit être équipé d'une pièce de serrage rapportée, usinée avec précision, présentant des secteurs fendus qui sont introduits dans une cavité de l'embout ; cette réalisation coûteuse est rendue nécessaire par la forme donnée au manchon de blocage qui ne peut être mis en place et bloqué de manière efficace que s'il présente une précision géométrique et dimensionnelle suffisante et s'il est associé à une pièce de serrage mécanique usinée avec précision.

Le but de l'invention est donc de proposer un assemblage combustible démontable d'un réacteur nucléaire refroidi par de l'eau légère comportant un faisceau de crayons combustibles parallèles maintenus dans une ossature formée par des tubes-guides, des entretoises et des embouts d'extrémité fixés sur les extrémités des tubes-guides, l'un au moins des embouts, l'embout supérieur, par exemple, étant fixé par une plaque adaptatrice extrémité supérieure de chacun des tubes-guides de manière démontable, par l'intermédiaire d'une partie d'extrémité supérieure du tube-guide déformable radialement et présentant une partie d'accrochage en saillie radiale vers l'extérieur, engagée à l'intérieur et sur une partie de la longueur d'une ouverture traversant l'embout et comportant, dans sa partie recevant le tube-guide, un élargissement annulaire destiné à recevoir la partie d'accrochage du tube-guide, l'expansion radiale de l'extrémité du tube-guide et le maintien de sa partie d'accrochage dans l'élargissement annulaire de l'ouverture de la plaque adaptatrice de l'embout étant assurés par un manchon de blocage comportant une douille d'expansion restant saillante à l'extrémité du tube-guide dans la position de blocage du manchon, à l'intérieur d'une partie de l'ouverture de l'embout ne recevant pas,le tube-guide, cette partie de l'ouverture de la plaque adaptatrice comportant au moins une cavité radiale à l'intérieur de laquelle on déforme une partie de la virole de fixation dans la direction radiale pour assurer la fixation du manchon de blocage, dans lequel :
- la partie d'extrémité supérieure du tube-guide présente une forme tronconique et l'ouverture une forme tronconique sensiblement de même angle au sommet que la partie d'extrémité du tube-guide,
- la surface externe du manchon de blocage présente successivement de haut en bas dans la direction axiale, une partie cylindrique et une partie tronconique sensiblement de même angle au sommet que la partie tronconique de l'ouverture, reliées suivant la grande base de la partie tronconique dont le diamètre est égal au diamètre de la partie cylindrique,
- la virole de fixation délimitée par la partie cylindrique de la surface du manchon est réalisée en une seule pièce avec la partie délimitée par la surface tronconique constituant la douille d'expansion et présente une épaisseur inférieure à l'épaisseur de la douille d'expansion dans sa zone proche de la virole de fixation; la virole de fixation présente en outre une paroi mince assurant, par sa déformation dans au moins une cavité radiale, le blocage et l'imperdabilité du manchon de blocage et la douille d'expansion présente une paroi épaisse au moins dans sa zone proche de la virole de fixation assurant le serrage du tube-guide dans l'ouverture de la plaque adaptatrice, et
- une rainure de préhension annulaire est usinée dans la surface interne de la paroi épaisse de la douille d'expansion du manchon de blocage.

Afin de bien faire comprendre l'invention, on a maintenant décrire, à titre d'exemples non limitatifs, en se référant aux figures jointes en annexe, plusieurs modes de réalisation d'un dispositif de fixation suivant l'invention, dans le cas d'un assemblage combustible démontable d'un réacteur nucléaire à eau sous pression.

La figure 1 est une vue en élévation d'un assemblage combustible d'un réacteur nucléaire à eau sous pression.

La figure 2 est une vue en élévation de l'ossature de l'assemblage représenté sur la figure 1.

La figure 3 est une vue en élévation avec coupe partielle de l'embout supérieur de l'assemblage combustible.

La figure 4 est une vue de dessus suivant 4 de l'embout supérieur représenté sur la figure 3.

La figure 5 est une vue en coupe axiale d'un dispositif de fixation d'un tube-guide suivant l'invention.

La figure 6 est une vue en perspective avec arrachement du manchon de blocage du dispositif de fixation représenté sur la figure 5.

La figure 6A est une vue en coupe par un plan axial de symétrie du manchon de blocage représenté sur la figure 6.

La figure 7 est une vue en perspective avec arrachement d'un manchon de blocage d'un dispositif de fixation suivant l'invention et suivant une seconde variante de réalisation.

La figure 7A est une vue en coupe par un plan axial de symétrie du manchon de blocage représenté sur la figure 7.

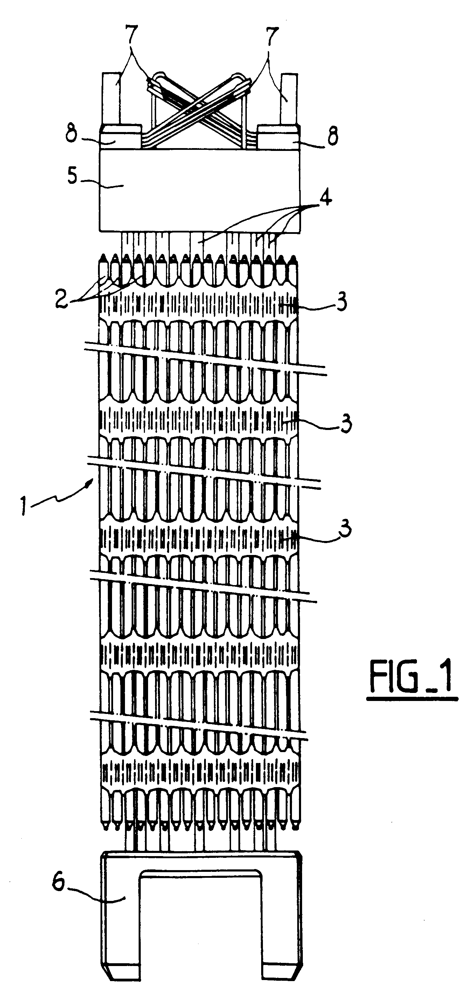

Sur la figure 1, on voit un assemblage combustible désigné de manière générale par le repère 1 et constitué par un faisceau de crayons combustibles parallèles 2 maintenus par des entretoises 3 disposées avec un certain espacement suivant la longueur des crayons 2. Les entretoises 3 sont constituées par des grilles dont les cellules reçoivent chacune un crayon combustible. Certaines positions dans le réseau des grilles sont occupées par des tubes-guides 4 dont la longueur est supérieure à la longueur des crayons combustibles 2.

Les tubes-guides 4 sont reliés à l'une de leurs extrémités à un embout 5 constituant l'embout supérieur de l'assemblage combustible et à leur autre extrémité à un second embout 6 constituant l'embout inférieur.

Lorsque l'assemblage est en position de stockage sous eau dans une piscine, l'embout supérieur 5 est accessible depuis le dessus de la piscine. Cet embout supérieur 5 porte des ressorts à lame 7 assurant le maintien de l'assemblage dans le coeur du réacteur, dont la plaque supérieure de coeur vient reposer sur les ressorts 7. L'embout comporte également des plots 8 saillants par rapport à sa face supérieure.

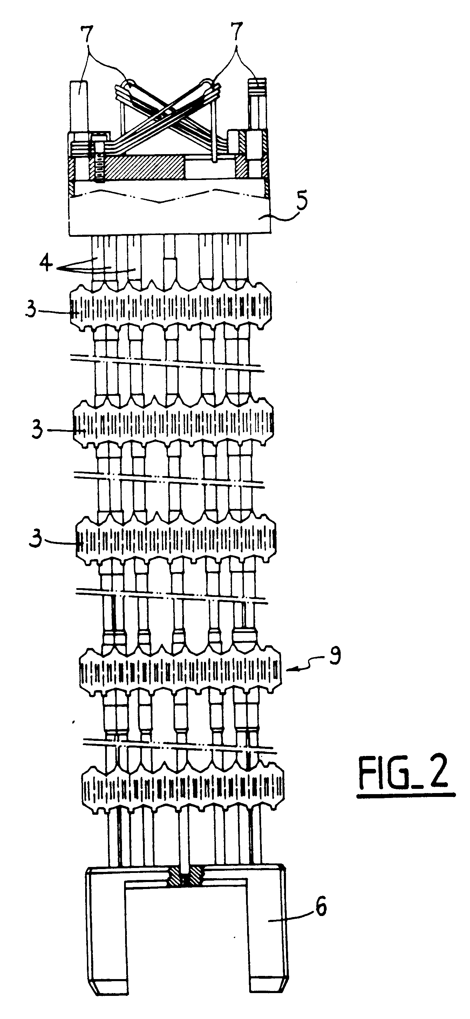

Sur la figure 2, on a représenté l'ossature 9 de l'assemblage combustible comportant les tubes-guides 4, des entretoises 3 et les embouts d'extrémité 5 et 6. Cette ossature 9 sert de logement aux crayons combustibles 2 du faisceau qui peuvent être introduits ou extraits de l'ossature, lorsque l'embout supérieur 5 est enlevé. Pour effectuer le remplacement ou le prélèvement de crayons, on prévoit des liaisons démontables entre l'extrémité des tubes-guides 4 et l'embout supérieur 5.

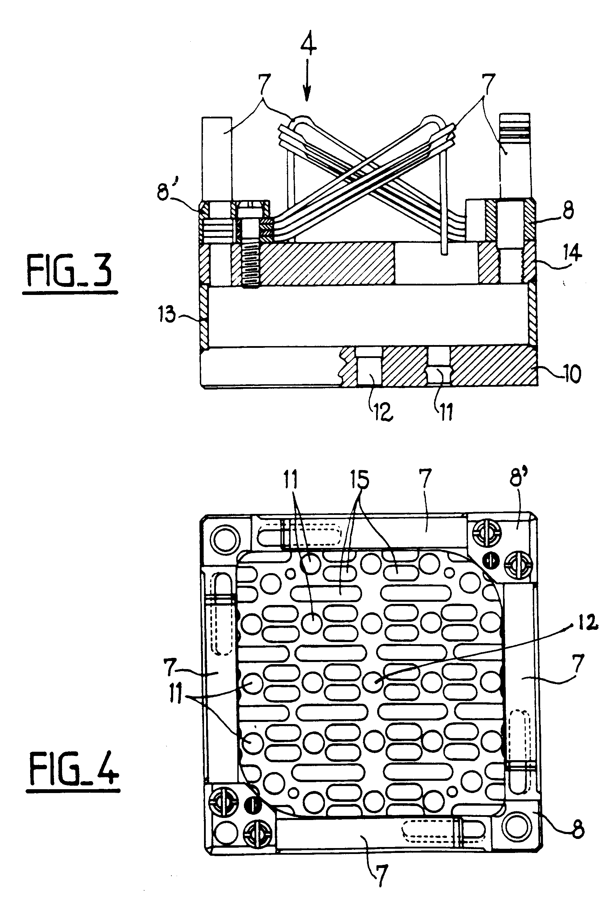

Sur les figures 3 et 4, on voit un embout supérieur d'un assemblage combustible comportant une plaque adaptatrice 10 dans laquelle viennent s'engager les tubes-guides, à l'intérieur d'ouvertures 11 traversant cette plaque adaptatrice et accessibles depuis la partie supérieure de l'assemblage combustible. Le tube-guide d'instrumentation de l'assemblage combustible situé en partie centrale est reçu dans une ouverture 12 de forme particulière. L'embout supérieur de l'assemblage est constitué par la plaque adaptatrice 10 et par un cadre 14 reliés entre eux par l'intermédiaire d'une jupe 13 soudée sur la plaque 10 et sur le cadre 14. Le cadre 14 porte les bossages 8 comportant les ouvertures de centrage et des brides 8′ de maintien des ressorts 7.

Comme il est visible sur la figure 4, les trous de passage 11 permettant la fixation des tubes-guides 4 sont disposés dans des positions définies correspondant aux positions des vingt-quatre tubes-guides de l'assemblage. Des trous de passage d'eau 15 traversent la plaque adaptatrice 10 de l'embout entre les ouvertures traversantes 11 des tubes-guides.

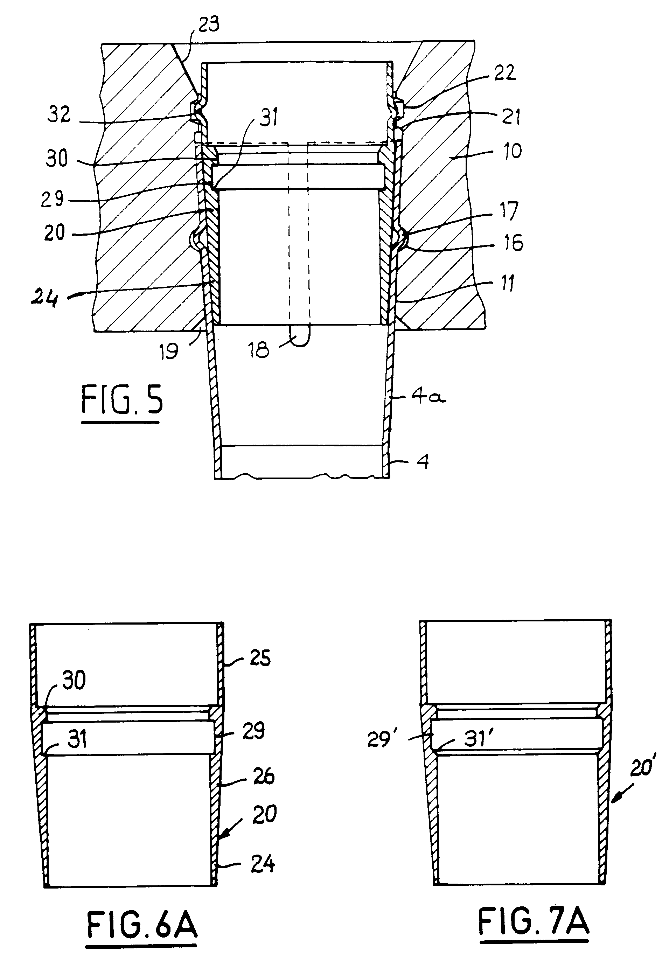

Comme il est visible sur la figure 5, la partie supérieure 4a du tube 4 présente une forme tronconique évasée vers le haut correspondant à la forme du trou de passage 11 dans sa partie inférieure recevant l'extrémité du tube 4.

La partie supérieure 4a du tube 4 comporte de plus deux fentes telles que la fente 18 disposées suivant la direction des génératrices du tronc de cône et dans des positions diamétralement opposées. Ces deux fentes telles que la fente 18 délimitent deux secteurs tronconiques dans la partie supérieure 4a du tube-guide 4 qui possède ainsi une certaine latitude de déformation radiale. Dans la partie supérieure 4a du tube-guide 4, on prévoit d'autre part, sur chacun des secteurs déformables radialement, une partie en saillie vers l'extérieur 17 en forme de portion d'anneau qui vient se loger, lorsque le tube-guide 4 est mis en place dans l'ouverture 11 de la plaque adaptatrice 10, à l'intérieur d'un élargissement annulaire 16 du trou 11. L'expansion radiale de la partie supérieure 4a du tube 4 est assurée par un manchon de blocage 20. On réalise ainsi l'accrochage et la fixation du tube 4 dans la plaque adaptatrice 10 et l'embout démontable 5.

La partie de l'ouverture traversante 11 de forme tronconique recevant le tube-guide 4 et comportant l'élargissement annulaire 16 présente une partie d'entrée évasée 19 facilitant l'introduction du tube 4 et se termine par un épaulement 21.

La partie 17 du tube 4 de forme annulaire et en saillie vers l'extérieur est préformée avant l'introduction du tube dans l'ouverture 11 et permet par élasticité des secteurs tronconiques le blocage axial du tube 4 dans la cavité annulaire 16. Il est à remarquer que la partie supérieure du tube 4 ne vient pas en butée sur l'épaulement 21 dans sa position d'engagement à l'intérieur de la plaque adaptatrice. Cette disposition permet de faciliter la mise en place et d'améliorer le positionnement du tube-guide 4 dans la plaque adaptatrice 10.

La partie de l'ouverture 11 située au-dessus de l'épaulement 21 comporte des cavités 22 en forme de portions d'anneau usinées dans la direction radiale à l'intérieur de la plaque adaptatrice 10.

Au-dessus des cavités 22, l'ouverture 11 comporte une partie tronconique 23 évasée vers le haut et débouchant sur la face supérieure de la plaque adaptatrice 10.

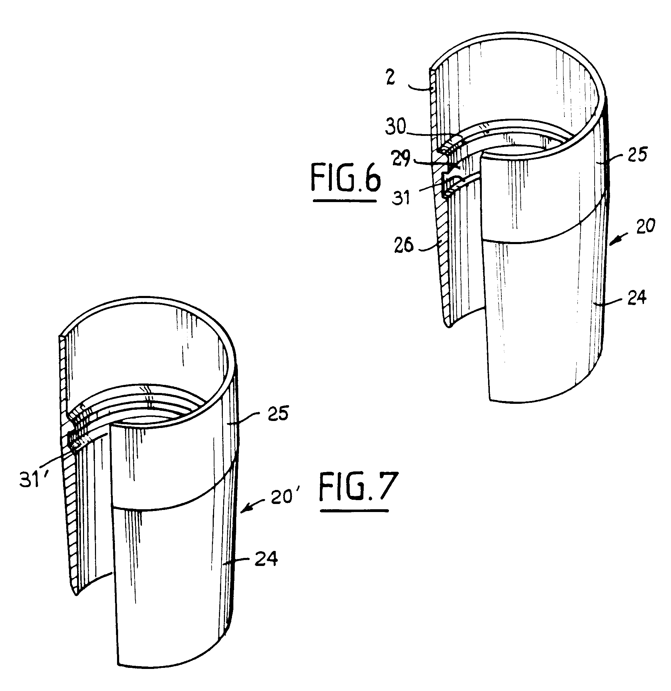

Sur les figures 6 et 6A, on voit un manchon de blocage 20 d'un dispositif de fixation d'un tube-guide tel que représenté sur la figure 5 qui comporte une partie inférieure 24 constituée par une virole de forme tronconique et une partie supérieure 25 constituée par une virole de forme cylindrique.

La virole tronconique 24 qui comporte à son extrémité inférieure une surface d'engagement 24a est destinée à venir en position de blocage à l'intérieur de l'extrémité 4a du tube-guide 4 comme représenté sur la figure 5. La virole 24 assure l'expansion radiale des secteurs tronconiques constituant la partie supérieure 4a du tube 4 et le maintien des saillies 17 dans l'élargissement annulaire 16 de l'ouverture 11 de la plaque adaptatrice 10 de l'embout.

La virole supérieure 25 constitue la virole de fixation du manchon de blocage venant se loger dans la partie supérieure du trou 11 de la plaque adaptatrice 10, lorsque le manchon 20 est en position de blocage comme représenté sur la figure 5.

Selon l'invention, la surface extérieure du manchon de blocage est de forme cylindro-tronconique et ne comporte pas de partie en saillie radiale vers l'extérieur.

Le manchon de blocage 20 comporte une paroi tubulaire 26 en une seule pièce dont la surface externe présente une partie supérieure cylindrique et une partie inférieure tronconique reliées par la grande base de la partie tronconique.

L'épaisseur de la paroi 26 est variable suivant la hauteur de cette paroi. La partie supérieure 25 de la paroi constitue une virole de faible épaisseur. L'alésage intérieur de la partie inférieure 24 du manchon de blocage est de forme cylindrique, si bien que la paroi présente une épaisseur décroissante de haut en bas dans cette partie inférieure 24.

La partie 24 de la paroi comporte une gorge annulaire 29 au voisinage de son extrémité supérieure, dans sa partie de forte épaisseur. L'épaisseur de la paroi de la partie 24 est sensiblement supérieure à l'épaisseur de la virole 25, au moins dans sa partie supérieure de forte épaisseur.

La virole 25 est séparée de la partie tronconique 24 par un rebord 30 en saillie radiale vers l'intérieur du manchon. La gorge 29 est délimitée du côté opposé au rebord 30, c'est-à-dire vers le bas par un épaulement 31.

La gorge 29 peut être utilisée pour la mise en place du manchon de blocage 20 dans un tube-guide, en introduisant un outil de préhension dans la gorge 29. Une poussée axiale peut être exercée sur le manchon 20, par l'intermédiaire de l'épaulement 31, pour réaliser le blocage du tube-guide dont l'écartement est maintenu par la partie tronconique 24 engagée dans le tube-guide, cette partie 24 constituant la douille d'expansion du manchon.

La virole 25 est alors située dans une partie de l'alésage de la plaque adaptatrice (10) de l'embout de l'assemblage qui n'est pas occupée par le tube-guide. Une ou plusieurs saignées radiales sont usinées dans cette partie de l'alésage de la plaque 10. Après blocage du tube-guide, la virole 25 est repoussée à l'intérieur des saignées radiales de l'alésage de l'embout dans lesquelles elle assure la fixation du manchon de blocage.

Sur les figures 7 et 7A, on a représenté une variante de réalisation du manchon de blocage des figures 6 et 6A. Le manchon 20′ est identique au manchon 20 mis à part le fait qu'il comporte un épaulement tronconique 31′ à la place de l'épaulement plan 31 utilisé lors de la mise en place du manchon de blocage dans le tube-guide.

A titre de variante, lors de la mise en place du manchon, la poussée peut être exercée par l'intermédiaire du rebord 30 en saillie radiale.

La fixation du manchon de blocage peut être assurée par déformation de zones 32 de la virole 25, à l'intérieur des cavités 22, grâce à un outillage de type connu introduit dans la partie supérieure du manchon. On réalise ainsi le blocage axial et en rotation du manchon 20.

Pour effectuer le démontage de l'embout de l'assemblage, il est nécessaire de réaliser dans un premier temps, l'extraction des manchons de blocage 20 introduits dans l'extrémité des tubes-guides.

Dans le cas du dispositif de fixation tel que représenté sur les figures 6 et 7, l'extraction d'un manchon est effectuée grâce à des éléments d'accrochage tels que des griffes d'un outil de traction qui peuvent être introduites dans la gorge 29 ou 29′.

Les éléments d'accrochage de l'outil de traction sur le manchon peuvent être mis en place facilement par l'intérieur du manchon, avec un contrôle depuis l'intérieur de la piscine. La traction sur le manchon effectuée par l'intermédiaire d'une partie en creux de sa surface interne permet de réaliser le démontage plus facilement par extraction des zones de fixation déformées 32 des cavités 22. Le manchon n'est plus retenu dans l'embout et la douille d'expansion 24 peut alors être extraite du tube-guide 4.

L'invention ne se limite pas aux modes de réalisation qui ont été décrits.

On peut imaginer des gorges d'accrochage accessibles par l'intérieur du manchon d'une forme différente de celles qui ont été décrites.

Enfin, l'invention s'applique au cas de tout assemblage combustible pour un réacteur à eau légère comportant un embout démontable dans lequel les tubes-guides de l'assemblage sont fixés par des manchons de blocage.

## Revendications

1. Assemblage combustible démontable d'un réacteur nucléaire refroidi par de l'eau légère comportant un faisceau de crayons combustibles parallèles maintenus dans une ossature (9) formée par des tubes-guides (4), des entretoises (3) et des embouts d'extrémité (5, 6) fixés sur les extrémités des tubes-guides (4) l'un au moins des embouts (5, 6), l'embout supérieur (5) par exemple étant fixé par une plaque adaptatrice (10) sur l'extrémité supérieure de chacun des tubes-guides (4), de manière démontable, par l'intermédiaire d'une partie d'extrémité supérieure (4a) du tube-guide (4) déformable radialement et présentant une partie d'accrochage (17) en saillie radiale vers l'extérieur, engagée à l'intérieur et sur une partie de la longueur d'une ouverture (11) traversant l'embout (5, 10) et comportant, dans sa partie recevant le tube-guide (4), un élargissement annulaire (16) destiné à recevoir la partie d'accrochage (17) du tube-guide, l'expansion radiale de l'extrémité du tube-guide et le maintien de sa partie d'accrochage (17) dans l'élargissement annulaire (16) de l'ouverture (11) de la plaque adaptatrice (10) de l'embout (5) étant assurés par un manchon de blocage (20) comportant une douille d'expansion (24) du tube-guide (4) et une virole d'expansion (25) dans l'embout restant saillante à l'extrémité du tube-guide dans la position de blocage du manchon (20), à l'intérieur d'une partie de l'ouverture (11) de l'embout (5, 10) ne recevant pas le tube-guide (4), cette partie de l'ouverture (11) de la plaque adaptatrice (10) comportant au moins une cavité radiale (22) à l'intérieur de laquelle on déforme une partie (32) de la virole de fixation (25) dans la direction radiale, pour assurer la fixation du manchon de blocage (20), dans lequel, pour chacun des tubes-guides démontables :
- la partie d'extrémité supérieure (4a) du tube-guide (4) présente une forme tronconique et l'ouverture (11) une forme tronconique sensiblement de même angle au sommet que la partie d'extrémité (4a) du tube-guide (4),
- la surface externe du manchon de blocage (20) présente successivement de haut en bas dans la direction axiale, une partie cylindrique et une partie tronconique sensiblement de même angle au sommet que la partie tronconique de l'ouverture (11), reliées suivant la grande base de la partie tronconique dont le diamètre est égal au diamètre de la partie cylindrique,
- la virole de fixation (25) délimitée par la partie cylindrique de la surface du manchon est réalisée en une seule pièce avec la partie délimitée par la surface tronconique constituant la douille d'expansion (24) et présente une épaisseur inférieure à l'épaisseur de la douille d'expansion dans sa zone proche de la virole de fixation; la virole de fixation (25) présente en outre une paroi mince assurant, par sa déformation dans au moins une cavité radiale (22), le blocage et l'imperdabilité du manchon de blocage (20) et là douille d'expansion (24) présente une paroi épaisse au moins dans sa zone proche de la virole de fixation (25) assurant le serrage du tube-guide (4) dans l'ouverture (11) de la plaque adaptatrice (10), et
- une rainure de préhension annulaire (29) est usinée dans la surface interne de la paroi épaisse de la douille d'expansion (24) du manchon de blocage (20).

2. Assemblage suivant la revendication 1, caractérisé par le fait que la rainure de préhension (29) est séparée de la virole de fixation (25) par un rebord (30) en saillie radiale vers l'intérieur du manchon (20).

3. Assemblage suivant l'une quelconque des revendications 1 et 2, caractérisé par le fait que la rainure de préhension (29) est délimitée à sa partie opposée à la virole de fixation (25) par un rebord tronconique (31) coaxial à la douille d'expansion (24).

## Claims

1. Demountable fuel assembly of a nuclear reactor cooled by light water, comprising a bundle Of parallel fuel rods held in a framework (9) consisting of guide tubes (4), spacers (3) and end fittings (5, 6) fastened to the ends of the guide tubes (4), at least one of the end fittings (5, 6), the upper end fitting (5) for example, being fastened demountably by means of an adaptor plate, to the upper end of each of the guide tubes (4) by means of an upper end part (4a) of the guide tube (4) which is radially deformable and which has an interlocking part (17) projecting radially out-wards, engaging inside and over part of the length of an opening (11) passing through the end fitting (5; 10) and comprising, in its part receiving the guide tube (4), an annular widening (16) adapted to receive the interlocking part (17) of the guide tube, the radial expansion of the end of the guide tube and the holding of its interlocking part (17) in the annular widening (16) of the opening (11) in the adaptor plate (10) of the end fitting (5) being provided by a locking sleeve (20) comprising an expansion socket (24) for the guide tube (4) and an expansion ferrule (25) for fixing in the end fitting, which continues to project from the end of the guide tube in the locking position of the sleeve (20), inside a part of the opening (11) in the end fitting (5, 10) which does not receive the guide tube (4), this part of the opening (11) in the adaptor plate (10) having at least one radial cavity (22) inside which a part (32) of the fixing ferrule (25) is radially deformed in order to fix the locking sleeve (20), wherein, for each of the demountable guide tubes:
- the upper end part (4a) of the guide tube (4) is frustoconical in shape and the opening (11) has a frustoconical shape with substantially the same angle of apex as the end part (4a) of the guide tube (4),
- the outer surface of the locking sleeve (20) has, successively, from top to bottom in the axial direction, a cylindrical portion and a frustoconical portion with substantially the same angle of apex as the frustoconical part of the opening (11), said portions being connected at the large base of the fustoconical portion the diameter of which is equal to the diameter of the cylindrical portion,
- the fixing ferrule (25) defined by the cylindrical portion of the sleeve surface is made in one piece with the part delimited by the frustoconical surface constituting the expansion socket (24) and has a thickness less than the thickness of the expansion socket in its region close to the fixing ferrule; the fixing ferrule (25) also has a thin wall which, by deformation in at least one radial cavity (22), ensures that the locking sleeve (20) is secured and cannot become lost, and the expansion socket (24) has a thick wall, at least in its area close to the fixing ferrule (25), ensuring that the guide tube (4) is securely held in the opening (11) in the adaptor plate (10) and
- an annular interlocking groove (29) is machined in the inner surface of the thick wall of the expansion socket (24) of the locking sleeve (20).

2. Assembly according to claim 1, characterised in that the interlocking groove (29) is separated from the fixing ferrule (25) by a rim (30) projecting radially inwards Of the sleeve (20).

3. Assembly according to either of claims 1 and 2, characterised in that the interlocking groove (29) is bounded, at its part opposite the fixing ferrule (25), by a frustoconical rim (31) coaxial with the expansion socket (24).

## Patentansprüche

1. Zerlegbares Brennstabbündel eines mit Leichtwasser gekühlten Kernreaktors, bestehend aus einem Bündel paralleler, durch ein Gerüst (9) zusammengehaltener Brennstäbe, welches Führungsrohre (4), Astandsstücke (3) und Endstücke (5, 6) umfaßt, die an den Enden der Führungsrohre (4) befestigt sind, wobei mindestens eines der Endstücke (5, 6), z.B. das obere Endstück (5), durch eine Adapterplatte (10) jeweils am oberen Ende der Führungsrohre (4) fixiert ist, und zwar zerlegbar, mittels eines radial verformbaren Teils des oberen Endes (4a) des Führungsrohres (4), welches ein Kupplungsteil (17) mit einem nach außen gerichteten ringförmigen Überhang aufweist und nach innen und auf einem Teil der Länge einer durch das Endstück (5, 10) gehenden Öffnung (11) eingeführt ist und in seinem das Führungsrohr (4) aufnehmenden Teil eine Ringerweiterung (16) zur Aufnahme des Kupplungsteils (17) des Führungsrohres umfaßt, wobei die radiale Ausdehnung des Führungsrohrendstücks und der zusammenhalt seines Kupplungsteils (17) in der Ringerweiterung (16) der Öffnung (11) der Adapterplatte (10) des Endstücks (5) durch eine Arretierungshülse erfolgt (20), die aus einer Erweiterungshülse (24) des Führungsrohres (4) und einem im Endstück befindlichen Ausdehnungsring (25) besteht, der am Ende des Führungsrohres in der Arretierungsposition der Hülse überhängt, wobei im Inneren eines Teils der Öffnung (11) des Endstücks (5, 10), durch welchen das Führungsrohr (4) nicht hindurchgeht, dieser Teil der Öffnung (11) der Adapterplatte (10) über mindestens eine Ringaussparung (22) verfügt, innerhalb derer ein Teil (32) des Befegtigungsrings (25) in radialer Richtung verformt wird, um die Fixierung der Arretierungshülse zu gewährleisten, in welcher, für jedes der zerlegbaren Führungsrohre:
- der Teil des oberen Endes (4a) des Führungsrohrs (4) kegelstumpfförmig ist und die Öffnung (11) an der Spitze ebenfalls eine Kegelstumpfform mit einem ähnlichen Winkel aufweist wie das Endstück (4a) des Führungsrohres (4),
- die äußere Oberfläche der Arretierungshülse (20) fortlaufend von oben nach unten in Axialrichtung einen zylindrischen und einen kegelstumpfförmigen Teil aufweist mit einem am Scheitelpunkt ähnlichen Winkel wie der kegelstumpfförmige Teil der Öffnung (11), wobei die beiden Teile an der großen Grundlinie des Kegelstumpfteils, dessen Durchmesser gleich dem Durchmesser des zylindrischen Teils ist, verbunden sind,
- der durch den zylindrischen Teil der Hülsenoberfläche abgegrenzte Befestigungsring (25) gemeinsam mit dem durch die kegelstumpfförmige Oberfläche abgegrenzten Teil, welcher die Erweiterungshülse (24) bildet, aus einem Stück besteht und eine geringere Dicke aufweist als die Erweiterungshülse im an den Befestigungsring angrenzenden Bereich; der Befestigungsring (25) außerdem eine dünne Wand besitzt, welche durch ihre verformung in mindestens einer Ringaussparung (22) die Arretierung und die Unverlierbarkeit der Arretierungshülse (20) gewährleistet, und die Erweiterungshülse (24), zumindest in dem an den Befegtigungsring (25) angrenzenden Bereich, eine dicke Wand besitzt, um das Festdrehen des Führungsrohres (4) in der Öffnung (11) der Adapterplatte (10) zu gewährleisten, und
- eine Greifringnut (29) in die innere Oberfläche der dicken Wand der Erweiterungshülse (24) der Arretierungshülse (20) eingelassen ist.

2. Brennstabbündel nach Anspruch 1,
**dadurch gekennzeichnet**, daß die Greifringnut (29) von dem Befestigungsring (25) durch einen in das Innere der Hülse (20) radial überhängenden Rand (30) abgetrennt ist.

3. Brennstabbündel nach einem der beiden Ansprüche 1 oder 2,
**dadurch gekennzeichnet**, daß die Greifringnut (29) in ihrem dem Befestigungsring (25) gegenüber liegenden Teil durch einen kegelstumpfförmigen, koaxial zur Erweiterungshülse (24) befindlichen Rand (31) abgegrenzt ist.
